(19) Europäisches Patentamt
European Patent Office
Office européen des brevets

(11) Publication number: 0 184 381
B1

(12) # EUROPEAN PATENT SPECIFICATION

(45) Date of publication of patent specification: 31.05.89

(51) Int. Cl.$^4$: C 25 B 3/00, C 25 B 13/08 // C07C51/00

(21) Application number: 85308631.2

(22) Date of filing: 27.11.85

(54) **Electrochemical process and cell.**

(30) Priority: 07.12.84 US 679504

(43) Date of publication of application: 11.06.86 Bulletin 86/24

(45) Publication of the grant of the patent: 31.05.89 Bulletin 89/22

(84) Designated Contracting States: BE DE FR GB IT NL SE

(56) References cited:
GB-A- 739 722
GB-A-1 401 290
US-A-2 921 005

(73) Proprietor: THE DOW CHEMICAL COMPANY
2030 Dow Center Abbott Road P.O. Box 1967
Midland Michigan 48640-1967 (US)

(72) Inventor: Cipriano, Robert A.
412 Huckleberry
Lake Jackson Texas 77566 (US)
Inventor: Ezzell, Robby R.
5 Deer Court
Lake Jackson Texas 77566 (US)

(74) Representative: Raynor, John et al
W.H. Beck, Greener & Co 7 Stone Buildings
Lincoln's Inn
London WC2A 3SZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 184 381 B1

## Description

The present invention concerns the conversion of the salt form of an organic amino carboxylic acid to its corresponding free acid form in an electrolytic cell system.

Conversion of salts of water soluble organic acids to pure acids have long been a problem. Simple neutralization with mineral acids or the like results in an aqueous mixture of the salt of the mineral acid and the desired organic acid. Isolation of the acids from this mixture generally results in contamination of the mineral acid salts with organics and thus to environmental disposal problems. In addition, the organic acids isolated in many cases are contaminated with salts of the mineral acid.

In order to overcome the aforementioned problems, Bodamer (U.S. Patent 2,921,005) described a three-compartment electrochemical cell for neutralization of water soluble salts of weak acids to the corresponding acids. The cell used had an anode compartment, a cathode compartment, and an intermediate compartment formed by two cation exchange membranes. The membranes were both sulfonated copolymers of styrene and divinylbenzene. The process was carried out by electrolyzing water on the anode to form oxygen and hydrogen ions in a dilute sulfuric acid electrolyte. Water was electrolyzed on the cathode forming hydrogen and hydroxide ions. The center compartment contained the sodium salt of a weak acid such as acetic acid. The complete process involved transferring protons from the anolyte compartment through the first cation exchange membrane into the center compartment while transferring sodium ions from the center compartment through the second cation exchange membrane to the catholyte compartment where combination with the hydroxide formed by the cathode reaction formed sodium hydroxide. It is noted in the example of the patent that the minimum voltage at 0.067 A per $cm^2$ (0.42 A per square inch (asi)) was 11—12 volts and this same voltage was obtained at only 0.04 asi towards the end of conversion. In addition, a small amount of the acid in the center compartment had leaked to the anode compartment. The cathode compartment contained only 0.1 N (0.4 percent) sodium hydroxide.

A later patent to Wallman (U.S. Patent 3,411,998) teaches using a cell such as described by Bodamer for reclaiming spent alkali metal carboxylate solutions. In this patent, the total reaction for the center compartment when a tribasic acid such as citric acid (Cit) is used is:

$$Na_3Cit + 2H^+ \rightarrow NaH_2Cit + 2Na^+$$

The total process involves feeding the caustic formed at the cathode to an evaporator for concentration to a useful level. The membranes used in the process were typical hydrocarbon types available commercially at that time.

A later patent to Giuffrida (U.S. Patent 4,057,483) attempts to improve the process of the above-mentioned three-compartment cell by adding another compartment. In this patent, a four-compartment cell is formed by interposing three cation exchange membranes between the anode and cathode. The membranes used are said to be selected from those commercially available. In this cell, the sodium salt of the weak acid is circulated through both center compartments with predominate conversion of the salt to the acid being achieved in the compartment nearest the anode. The purpose of the extra compartment is to intercept protons transported from first compartment and thus prevent neutralization of the caustic formed at the cathode with the attendant loss in current efficiency.

A further purpose of the four compartment cell of U.S. Patent 4,067,483 is to provide a buffer zone formed by the intermediate salt feed compartment. The prior art three compartment cell at low conversions not only tend to lose weak acid ions to the anolyte but at high conversions allows great loss of weak acid to the catholyte. Examples 1 and 2 of the patent show a direct comparison of the four compartment and the three compartment with 8 percent caustic in the catholyte. The four compartment gives 83 percent current efficiency while the three compartments only an average of 65 percent. No cell voltage information is given in any examples. Thus, overall power efficiencies can not be calculated.

The present invention represents an improvement over known electrolytic methods of converting salts of amino carboxylic acids to their corresponding free acids.

In a process for converting the salt form of an organic amino carboxylic acid to its corresponding free acid form in an electrolytic cell system utilizing permselective cation membranes to establish an anode compartment, a cathode compartment, and an intermediate compartment wherein the conversion occurs, and wherein the anode compartment contains an acidic aqueous electrolyte, the cathode compartment contains a basic aqueous electrolyte, and the intermediate compartment contains an aqueous solution of the ionized salt of the acid and the free acid, the improvement comprises the use of a fluorocarbon membrane facing the cathode and the center compartment has a thickness of 1 mm or less.

The invention uses preferably a three-compartment cell similar to the cell described by Bodamer. The cell is constructed by interposing two cation exchange membranes between an anode and a cathode. The membrane facing the anode may be either a sulfonated hydrocarbon variety or a sulfonic acid fluorocarbon type. A critical feature is that the membrane facing the cathode be of the fluorocarbon variety. The functional group may be sulfonic acid, carboxylic acid, or a combination of both sulfonic and carboxylic. When both are present, the carboxylic should preferably face the cathode. Use of the fluorocarbon membranes facing the cathode, and thus in contact with the caustic solution in the cathode compartment leads to far higher current efficiencies than described in the prior art. In fact, higher current efficiencies are

achieved than those reported by Giuffrida using the four-compartment type cell. The present invention accomplishes this without having to pay the power (voltage) penalties associated with the extra membrane and the extra compartment of the four-compartment cell.

In addition, when the fluorocarbon membrane is used at the cathode far higher strength caustic can be produced in the cathode compartment than previously reported. The higher strength caustic is achieved while still maintaining current efficiencies superior to the prior art. Thus, in a process where caustic strength is critical for further use of the caustic, either no evaporator as the prior art describes or extremely reduced evaporator load is achieved by the present invention. When greater than about 20 percent caustic is desired, it is preferable to use a fluorocarbon carboxylic functional membrane facing the cathode.

It being understood the membrane side facing the center compartment may be sulfonic or carboxylic. It is advantageous, particularly when sulfonic acid functional membranes are used, to serially flow catholyte portion to catholyte portion in a series of cells in a continuous process. By doing so, a current efficiency average is attained which is higher than the current efficiency resulting if all cells were operated at the highest or resultant caustic strength.

A further embodiment of the present invention is a means for achieving higher conversion of the salt of the weak acid to acid without significant transference of the said acid into adjoining compartments and without paying the power penalties described in the prior art. During the course of converting the sodium salt of the weak acid to the free acid, the center compartment, where this conversion takes place, becomes a progressively weaker electrolyte and thus less electrically conductive. Particularly towards the end of the conversion, this phenomena causes either a large increase in cell voltage when a constant current is applied or a large decrease in current when a constant voltage is applied. In either case, the power consumption of the process must substantially increase towards the latter stages of conversion or the productivity of the cell must be curtailed dramatically.

It is desirable to maintain a constant current and thus constant productivity from the process and thus an increase in power consumption would be the normal penalty. In a batch process, this penalty is not nearly as severe as in a continuous process utilizing the same number of cells. The batch process, in essence, averages the power consumption over the entire conversion. Only a fraction of the run is under conditions where the higher power consumption is in effect. However, it may be desirable to operate the process continuously. In this case, the weak acid salt solution would normally be flowed to the cells at a rate such that the total desired conversion would be accomplished in one pass. In this mode, the cells would always be at a point of high conversion, since the outflow represents the final product, and thus is in the region of high power consumption.

Surprisingly, it has been found that the voltage of the cells stays relatively constant through about 70 to 90 percent of the conversion of the acid salt to the acid without significant transference of said acid into adjoining compartments. Thus, 70 to 90 percent of the conversion can be accomplished without significant voltage or power penalties or product loss in a continuous process or batch. It is then possible to pass the outflow from the first cells to a second finishing cell or set of cells and in this way only take the power penalty on from about 10 to 30 percent of the cells employed in the process. All of this can be accomplished while still maintaining the continuous mode of operation. The power penalty can be further reduced by operating the second cell or set of cells at reduced current density. The main feature of this embodiment of the invention is that the first 70 to 90 percent of the conversion is a continuous process which is accomplished in a separate electrolysis process and the remainder accomplished in a finishing electrolysis process.

It would, of course, be beneficial, relative to a normal continuous process, to take only 50 percent or even lower conversion in a separate step, but for maximum benefit, the finishing cell or cells should be kept as small as possible. In general, this will be determined by the point in conversion at which a sizeable increase in power consumption occurs. For example, if the power increase occurred at 75 percent conversion, then 25 percent of the cells, assuming equal current density throughout, would be used as finishing cells and thus only 25 percent of the power penalty that would have been associated with running all cells equally would actually be realized. It is possible, and in many cases desirable, to have more than one set of finishing cells. The flow can beneficially be cascaded through any number of finishing cells although a point of diminishing returns is reached at or about ten cells or sets of cells.

In accordance with the present invention an electrolytic process for converting salts of organic amino carboxylic acids to corresponding free acids is improved by employing cationic permselective fluorocarbon membranes. The employment of such membranes to separate the conventional three compartments of such processes (i.e. the anolyte compartment, the catholyte compartment and the intermediate compartment wherein the conversion occurs) results in a more energy efficient process, a higher concentration of base in the catholyte and fewer byproduct contaminates within the respective compartments. In addition, where a continuous process is desired, the employment of a major conversion cell or cells in series with one or more finishing cells reduces the overall power requirements and improves the overall current efficiencies of the process.

Any of the several prior art cell designs may be employed but the three compartment cell is the preferred model. The cell of the present invention is designed to have a very narrow intermediate cell, measured membrane to membrane, of 1 mm or less, preferably about 0.7 to 1.0 mm and most preferably less than 0.7 mm. The intermediate cell is placed under a positive pressure from each of the anolyte and

catholyte chambers. The membranes are maintained spaced apart by a non-reactive, non-conductive porous separator, preferably a woven or non-woven laminar mesh like scrim as for example polyethylene or polypropylene. The thickness of such a scrim determines the minimum spacing between the pairs of membranes.

The electrodes are not critical in materials of construction nor in design and may be any of the known reported prior art materials suitably taught to be stable and useful for each of the anolyte and catholyte electrolytes. For example platinum on a titanium support as well as lead, tin, silver, antimony, iridium, ruthenium, cobalt or mixtures thereof as well as coatings on a support such as titanium, carbon, steel, and others may be employed as the anode material. Cathode prepared from palladium, platinum, nickel, carbon, steel, titanium or mixtures thereof which may be employed as is or as a coating on a support such as carbon, steel or titanium.

Membranes suitable for use in accordance with the present invention are the sulfonic and/or carboxylic acid functionalized polymer membranes such as sulfonic acid form of styrene divinyl benzene or fluorocarbon polymer membranes. The membrane facing the cathode is of the fluorocarbon variety.

The nature of the acid product produced by the present invention is any water soluble amino carboxylic acid of which its salt, e.g. alkali metal or ammonium salt is also soluble to some extent in water.

Similarly the number of cells to make up a unit is not critical but should be of a number and size to accommodate the available power supply.

Preferably the process should be designed to produce 70 to 90 percent conversion of the salt to the acid in one unit of cells and employ either a separate unit or certain selected cells in the first unit to carry out the more power intensive, less current efficient finishing of the remaining 10 to 30 percent of the salt to the acid.

Preferably the finishing cells are operated in cascade fashion and the principal conversion cells in once through fashion being operated in parallel flow.

When feasible, it is preferable to operate the process in a batch mode utilizing a recycle tank and forced circulation to obtain the desired conversion of acid salt to acid. In this instance no separate finishing cells, tanks, pumps, or power supply are required to obtain the desired product.

The present invention is idealized in illustration in the drawings.

Figure 1 illustrates in side view an idealized cell;

Figure 2 illustrates typical principal conversion cells in parallel and cascading finishing cells; and

Figure 3 illustrates principal conversion cells and finishing cells operative in parallel flow for product and the catholyte and anolyte in cascade in flow in the finishing cells.

In the following examples the nature of the membrane composition is shown to be important in the economics of operation of the conversion of an amino carboxylic acid salt to its free acid. The cell employed is that exemplified in Figure 1 and uses nine square inch electrodes.

*Cell Description*: For both cases A and I

- anode — Ir on titanium mesh
- cathode — nickel coated woven steel wire
- membranes —
  - Case A — two Ionics® 61-CZL-386 styrene divinyl benzene cation exchange membranes.
  - Case I — One Nafion® 324 fluorocarbon cation exchange membrane and one Nafion 901 fluorocarbon carboxylic acid, sulfonic acid functionalized bilayer cation exchange membrane.
- cell body — plexiglass, 3-compartment
  - active electrode area = 9 $in^2$
  - current density = 0.08 $A/cm^2$ (0.5 $A/in^2$)

*Case A Comparative Example Process Description*

The anolyte is comprised of 2,000 cc ($cm^3$) of 2 weight percent $H_2SO_4$ and is pumped through the anode chamber at 744 cc/min. The catholyte is comprised of 24 weight percent NaOH and is pumped through the cathode chamber at 734 cc/min. The middle solution is comprised of 870 grams of 35 weight percent N-(hydroxyethyl)ethylenediamine triacetic acid sodium salt ($Na_3HEDTA$) in $H_2O$. Its flow rate through the middle compartment is 81 cc/min. The voltage of the cell is adjusted to yield a current density of 0.08 $A/cm^2$ (0.5 $A/in^2$). During a run time of 4 hrs at a cell potential of 4 volts there was no decrease in the pH of the middle solution detected and the run was terminated.

*Case I Process Description for Present Invention*

The anolyte is comprised of 2,000 cc of 2 weight percent $H_2SO_4$ and was pumped through the anode chamber at 820 cc/min. The catholyte was comprised of 24 weight percent NaOH and was pumped through the cathode chamber at 680 cc/min. The middle solution was comprised of 834 grams of 35 weight percent $Na_3HEDTA$ in $H_2O$. The flow rate through the middle compartment was 104 cc/min. The voltage of the cell was adjusted to yield a current density of 0.08 $A/cm^2$ (0.5 $A/in^2$). During a run time of 4 hrs, the pH of the middle solution dropped from a pH 13 to pH 11.1. After 30 hrs, the pH of the middle solution was pH 2.5. An increase in the cell voltage occurred as the sodium ion decreased in concentration.

*Cell Description*: For both cases II and III
anode — Pt, Ir on titanium mesh
cathode — steel punched plate
membranes —
Case II — two MC3470 Ionics® styrene divinylbenzene based cation exchange membranes.
Case III — Two Nafion® 324 fluorocarbon based cation exchange membranes.
cell body — CPVC 3-compartemnt
active electrode area = 58.05 $cm^2$ (9 $in^2$)
current density = 0,2 $A/cm^2$ (1.25 $A/in^2$)

*Case II Description*

The anolyte was comprised of 2,000 cc of 5 weight percent $H_2SO_4$ and was pumped through the anode chamber at 400 cc/min. The catholyte was comprised of 19 weight percent NaOH and was pumped through the cathode chamber of 400 cc/min. The middle solution was comprised of 7,154 grams of 35 weight percent HEDTA sodium salt in water. The flow rate through the middle compartment was 370 cc/min. The voltage of the cell was adjusted to yield a current density of 0,2 $A/cm^2$ (1.25 $A/in^2$).

*Case III Description*

The anolyte was comprised of 2,000 cc of 5 weight percent $H_2SO_4$ and was pumped through the anode chamber at 500 cc/min. The catholyte was comprised of 20 weight percent NaOH and was pumped through the cathode chamber at 400 cc/min. The middle solution was comprised of 3,800 grams of 35 weight percent $Na_3$HEDTA in water. The flow rate through the middle compartment was 360 cc/min. The voltage of the cell was adjusted to yield a current density of 0,2 $A/cm^2$ (1.25 $A/in^2$).

The examples given are divided into two caustic concentrations. Cases A and I were operated to produce 24 weight percent NaOH. As obvious from Table I Case A gave no conversion of N-(hydroxyethyl)-ethylenediamine triacetic acid trisodium salt ($Na_3$HEDTA); to N-(hydroxyethyl)ethylenediamine triacetic acid (HEDTA). Case I functioned well and yielded an overall current efficiency of 59.6 percent for the conversion of $Na_3$HEDTA to HEDTA. Cases II and III were operated to yield a caustic concentration of 20 weight percent. Cases II and III gave overall current efficiencies of 53.15 percent and 74.9 percent respectively. Even though sulfonic acid functionalized styrene divinylbenzene based membranes may be utilized (as apparent by Case II) it is readily seen that when 20 weight percent or greater caustic is desired, it is advantageous to use a membrane of the fluorocarbon variety.

| | A Comparative | I | II | III |
|---|---|---|---|---|
| Anode Material | Ir on Ti | | Pt/Ti mesh | |
| Cathode Material | Ni coated woven wire | | punched steel | |
| Membranes | Ionics® 61CZL | Nafion®= 324 anode | Ionics® MC3470 | Nafion® 344 |
| Current Density/ Cell potential | 0.5 ASI*/4—5 | 0.5 ASI/$in^2$/ 6.5—6 | 1.25 ASI 8.1—7.5 | 1.25 ASI 7.5—5.5 |
| Anolyte | 2% $H_2SO_4$ 844 cc/min | Same 820 cc/min | 5% $H_2SO_4$ 400 cc/min | 15% $H_2SO_4$ 500 cc/min |
| Catholyte | 24% NaOH 734 cc/min | Same 680 cc/min | 19% NaOH 400 cc/min | 20% NaOH 400 cc/min |
| Intermediate | 35% N-(-hydroxyethyl-)-ethylene diamine triacetic acid, Na salt 81 cc/min | 104 cc/min | Same 370 cc/min | Same 360 cc/min |
| pH decrease | 4.0 hours No Decrease | 13 to 11.1 4 hrs. to 2.5 30 hrs. | 13—2.5 140 hrs. | 13—2.5 50 hrs. |
| Current Eff. | — | 59.6 | 53.15 | 74.9 |

*ASI = $A/in^2$
1 $A/in^2$ = 0.16 $A/cm^2$

## Claims

1. A process for converting the salt form of an organic amino carboxylic acid to its corresponding free acid form in an electrolytic cell system utilizing permselective cation membranes to establish an anode compartment, a cathode compartment, and an intermediate compartment wherein the conversion occurs, and wherein the anode compartment contains an acidic aqueous electrolyte, the cathode compartment contains a basic aqueous electrolyte, and the intermediate compartment contains an aqueous solution of the ionized salt of the acid and the free acid characterised in that the membrane facing the cathode is a fluorocarbon membrane and in that the intermediate compartment has a thickness of not more than 1 mm.

2. A process as claimed in Claim 1 wherein a sulfonic acid fluorocarbon membrane faces the anode.

3. A process as claimed in Claim 1 wherein a sulfonated hydrocarbon membrane faces the anode.

4. A process as claimed in any one of the preceding claims wherein the membrane facing the cathode has sulfonic acid groups.

5. A process as claimed in any one of the preceding claims wherein the membrane facing the cathode has polycarboxylic groups or carboxylic groups facing the cathode and sulfonic acid groups facing the center compartment.

6. A process as claimed in any one of the preceding claims wherein the conversion of salt in the center compartment is from 70 to about 90 per cent.

7. A process as claimed in any one of the preceding claims wherein conversion of salt to greater than 70 to 90 per cent is completed in a separate cell or cells.

8. A process as claimed in any one of the preceding claims wherein the center compartment has a thickness of less than 0.7 mm.

9. A process as claimed in any one of the preceding claims wherein the concentration of alkali metal hydroxide in the catholyte compartment is greater than 10 per cent.

10. A process as claimed in any one of the preceding claims wherein the alkali metal hydroxide is sodium hydroxide.

11. An electrolytic cell for carrying out conversion of a salt of an organic acid to the free acid, which cell comprises an anode compartment for containing an acidic aqueous electrolyte, a cathode compartment containing a basic aqueous electrolyte, an intermediate compartment for containing the salt to be converted, respective permselective cation membranes separating the anode and cathode compartments from the intermediate compartment, characterised in that the membrane facing the cathode is a fluorocarbon membrane, and the intermediate compartment has a thickness of not more than 1 mm.

## Patentansprüche

1. Verfahren zum Umwandeln der Salzform einer organischen Aminocarbonsäure in die entsprechende freie Säureform in einem Elektrolyse-Zellsystem unter Verwendung permselektiver Kationmembranen, um eine Anodenkammer, eine Kathodenkammer und eine Zwischenkammer herzustellen, worin die Umwandlung erfolgt und wobei die Anodenkammer einen sauren wäßrigen Elektrolyt enthält, die Kathodenkammer einen basischen wäßrigen Elektrolyt enthält und die Zwischenkammer eine wäßrige Lösung des ionisierten Salzes der Säure und die freie Säure enthält, dadurch gekennzeichnet, daß die der Kathode zugewandte Membran eine Fluorkohlenwasserstoff-Membran ist und daß die Zwischenkammer eine Dicke von nicht mehr als 1 mm hat.

2. Verfahren nach Anspruch 1, worin eine Sulfonsäure-Fluorkohlenwasserstoff-Membran der Anode zugewandt ist.

3. Verfahren nach Anspruch 1, worin eine sulfonierte Kohlenwasserstoff-Membran der Anode zugewandt ist.

4. Verfahren nach einem der vorhergehenden Ansprüche, worin die der Kathode zugewandte Membran Sulfonsäuregruppen aufweist.

5. Verfahren nach einem der vorhergehenden Ansprüche, worin die der Kathode zugewandte Membran Polycarbonsäuregruppen oder Carboxylgruppen aufweist, die der Kathode zugewandt sind und Sulfonsäuregruppen aufweist, die der Mittelkammer zugewandt sind.

6. Verfahren nach einem der vorhergehenden Ansprüche, worin die Umwandlung des Salzes in der Mittelkammer 70 bis etwa 90% beträgt.

7. Verfahren nach einem der vorhergehenden Ansprüche, worin die Unwandlung des Salzes zu mehr als 70 bis 90% in einer gesonderten Zelle oder gesonderten Zellen vervollständigt wird.

8. Verfahren nach einem der vorhergehenden Ansprüche, worin die Mittelkammer eine Dicke von weniger als 0,7 mm hat.

9. Verfahren nach einem der vorhergehenden Ansprüche, worin die Konzentration des Alkalihydroxids in der Katholytkammer größer ist als 10%.

10. Verfahren nach einem der vorhergehenden Ansprüche, worin das Alkalihydroxid Natriumhydroxid ist.

11. Elektrolysezelle zum Durchführen der Umwandlung eines Salzes einer organischen Säure in die freie Säure, wobei die Zelle eine Anodenkammer zur Aufnahme eines sauren wäßrigen Elektrolyten, eine Kathodenkammer, die einen basischen wäßrigen Elektrolyten enthält, eine Zwischenkammer zur

Aufnahme des umzuwandelnden Salzes, jeweils permselektive Kationmembranen, die die Anoden- und Kathodenkammern von der Zwischenkammer trennen, aufweist, dadurch gekennzeichnet, daß die der Kathode zugewandte Membran eine Fluorkohlenwasserstoff-Membran ist und daß die Zwischenkammer eine Dicke von nicht mehr als 1 mm aufweist.

**Revendications**

1. Procédé pour la conversion de la forme sel d'un acide aminocarboxylique organique en sa forme acide libre correspondante, dans un système de cellule électrolytique utilisant des membranes cationiques permsélectives pour la définition d'un compartiment anodique, d'un compartiment cathodique et d'un compartiment intermédiaire dans lequel a lieu la conversion, et le compartiment anodique contenant un électrolyte aqueux acide, le compartiment cathodique contenant un électrolyte aqueux basique et le compartiment intermédiaire contenant une solution aqueuse de l'acide libre et du sel ionisé de l'acide, caractérisé par le fait que la membrane faisant face à la cathode est une membrane fluorocarbonée, et par le fait que le compartiment intermédiaire a une épaisseur n'excédant pas 1 mm.

2. Procédé selon la revendication 1, dans lequel une membrane fluorocarbonée à groupes sulfo fait face à l'anode.

3. Procédé selon la revendication 1, dans lequel une membrane hydrocarbonée sulfonée fait face à l'anode.

4. Procédé selon l'une quelconque des revendications précédentes, dans lequel la membrane faisant face à la cathode comporte des groupes sulfo.

5. Procédé selon l'une quelconque des revendications précédentes, dans lequel la membrane faisant face à la cathode comporte des groupes polycarboxyliques ou des groupes carboxyle faisant face à la cathode, et des groupes sulfo faisant face au compartiment central.

6. Procédé selon l'une quelconque des revendications précédentes, dans lequel le taux de conversion du sel dans le compartiment central est de 70 à environ 90%.

7. Procédé selon l'une quelconque des revendications précédentes, dans lequel la conversion du sel, jusqu'à un taux allant de plus de 70% à 90%, est effectuée dans une cellule ou des cellulose séparées.

8. Procédé selon l'une quelconque des revendications précédentes, dans lequel le compartiment central a une épaisseur de moins de 0,7 mm.

9. Procédé selon l'une quelconque des revendications précédentes, dans lequel la concentration de l'hydroxyde de métal alcalin dans le compartiment cathodique est supérieure à 10%.

10. Procédé selon l'une quelconque des revendications précédentes, dans lequel l'hydroxyde de métal alcalin est l'hydroxyde de sodium.

11. Cellule électrolytique pour la mise œuvre de la conversion d'un sel d'un acide organique en l'acide libre, laquelle cellule comprend un compartiment anodique destiné à contenir un électrolyte aqueux acide, un compartiment cathodique contenant un électrolyte aqueux basique, un compartiment intermédiaire destiné à contenir le sel à convertir, des membranes cationiques permsélectives respectives séparant les compartiments anodique et cathodique d'avec le compartiment intermédiaire, caractérisée par le fait que la membrane faisant face à la cathode est une membrane fluorocarbonée, et le compartiment intermédiaire a une épaisseur n'excédant pas 1 mm.

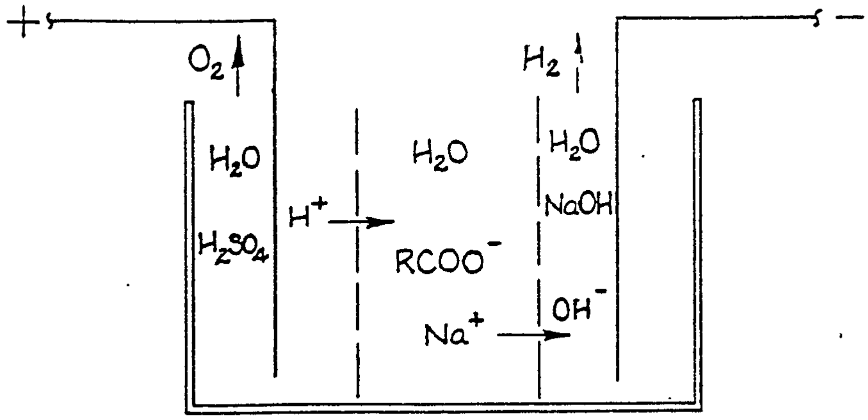
+
−
$O_2$
$H_2$
$H_2O$
$H_2SO_4$
$H^+$
$H_2O$
$RCOO^-$
$Na^+$
$H_2O$
NaOH
$OH^-$

FIG.1

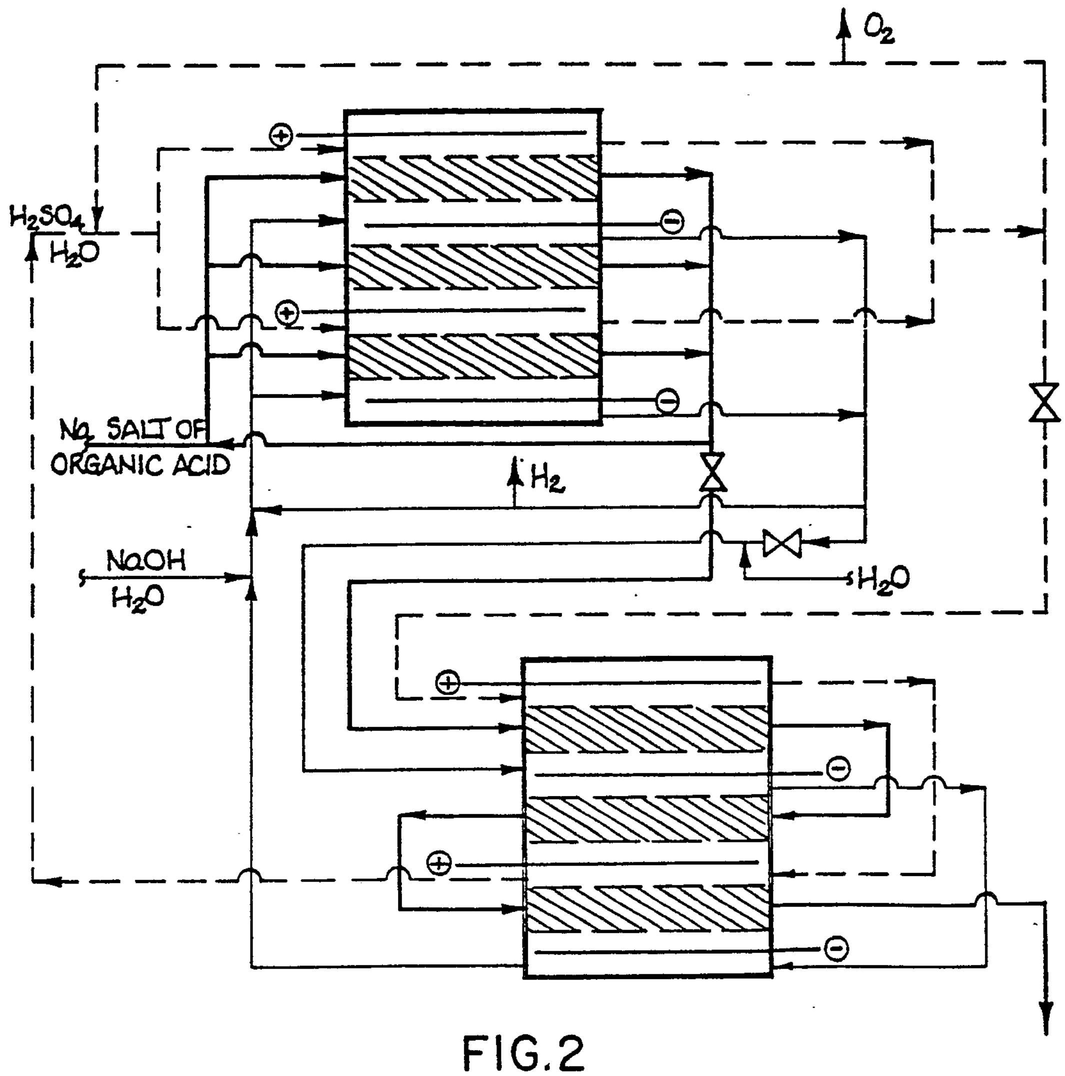
$O_2$
$H_2SO_4$
$H_2O$
Na SALT OF
ORGANIC ACID
$H_2$
NaOH
$H_2O$
$H_2O$

FIG.2

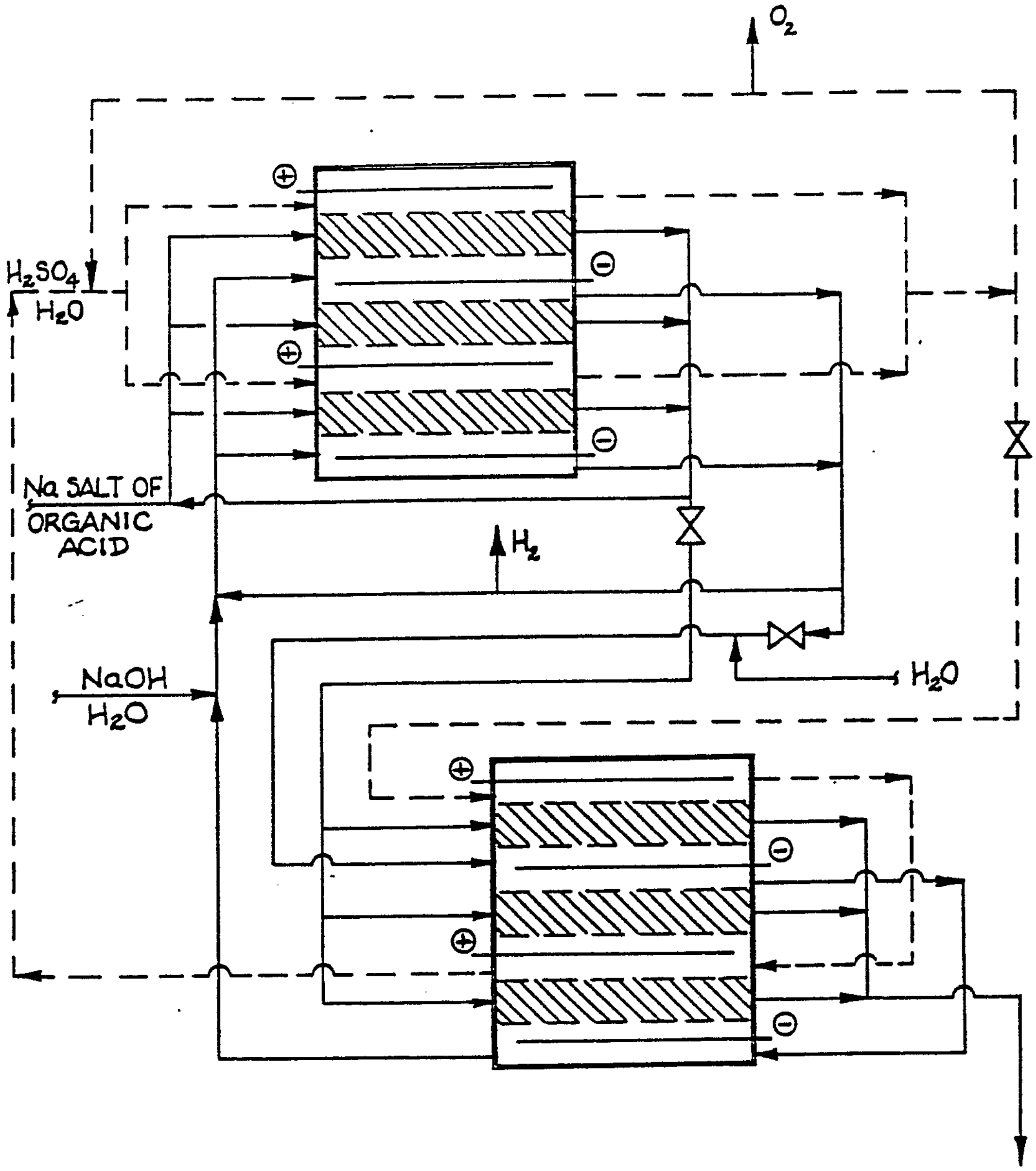


FIG.3